# FASCICULE DE BREVET EUROPEEN

(11) **EP 2 291 840 B1**
(45) Date de publication et mention de la délivrance du brevet: **13.01.2016**
(21) Numéro de dépôt: 09784386.6
(22) Date de dépôt: 14.05.2009
(51) Int. Cl.: G10K 11/168

(54) **PANNEAU ACOUSTIQUE POUR UNE TUYÈRE D'ÉJECTION**
AKUSTISCHE PLATTE FÜR EINE AUSSTRÖMDÜSE
ACOUSTIC PANEL FOR AN EJECTOR NOZZLE

(30) Priorité: 25.06.2008 FR 0803559
(43) Date de publication de la demande: 09.03.2011
(73) Titulaire: Aircelle, 76700 Gonfreville l'Orcher (FR); HERAKLES, 33185 Le Haillan (FR)
(72) Inventeur: VAUCHEL, Guy, Bernard, 76600 Le Havre (FR); DREVON, Emmanuel, 76280 Aglesqueville L'esneval (FR); GONIDEC, Patrick, 31530 Bretx (FR); RUCKERT, Guillaume, 27210 Fiquefleur-Équainville (FR); CONETE, Eric, 33700 Merignac (FR); BARRETEAU, Renaud, 33700 Merigna (FR)
(74) Mandataire: Gaillarde, Frédéric F. Ch.
(86) Numéro de dépôt international: PCT/FR2009/050900
(87) Numéro de publication internationale: WO 2010/007263

(56) Documents cités:
- EP-A- 0 895 223
- EP-A- 0 897 174
- EP-A- 1 111 584
- EP-A- 1 213 703
- EP-A- 1 217 605
- US-A- 4 465 725
- US-A- 5 594 216
- US-A1- 2001 048 048

## Description

La présente invention concerne une structure acoustique pour une tuyère d'éjection.

La présente invention concerne également une tuyère d'éjection et une nacelle comprenant une telle structure.

Un avion est propulsé par un ou plusieurs ensembles propulsifs comprenant chacun un turboréacteur logé dans une nacelle tubulaire. Chaque ensemble propulsif est rattaché à un aéronef par un mât situé sous une aile ou au niveau du fuselage.

Une nacelle présente généralement une structure comprenant une entrée d'air en amont du moteur et une section médiane apte à entourer une soufflante du turboréacteur, une section aval abritant généralement des moyens d'inversion de poussée et apte à entourer la chambre de combustion du turboréacteur. La nacelle est typiquement terminée par une tuyère d'éjection dont la sortie est située en aval du turboréacteur.

La tuyère d'éjection est usuellement constituée d'un module externe, également appelé tuyère commune ou tuyère primaire, et d'un module interne, également appelé cône d'éjection ou arrière corps central.

Pour des raisons de réduction de bruit, les surfaces en vis à vis de ces deux modules comporte des panneaux acoustiques aptes à piéger tout bruit. Ces panneaux comportent habituellement une ou plusieurs couches de structure à âme alvéolaire (structure couramment appelée « en nid d'abeille »). Ces couches sont revêtues sur leur face inférieure, c'est-à-dire non en contact avec le flux d'air à l'intérieur de la nacelle, d'une peau interne imperméable à l'air, dite « pleine », et sur leur face supérieure, c'est-à-dire en contact avec le flux d'air à l'intérieur de la nacelle, d'une peau externe perforée perméable à l'air, dite « acoustique ». Un tel panneau acoustique est décrit dans le document EP-A-1217 605.

Néanmoins, en sortie d'échappement, les gaz chauds issus du turboréacteur présentent typiquement une température élevée au moins égale à environ 500° C.

Il est connu de réaliser ces modules dans des matériaux supportant de telles températures, comme le titane, de l'acier ou du super alliage de type Inconel®. Pour cela, les différentes éléments du panneau acoustique sont assemblés par soudure ou brasage.

Cependant, le titane est un matériau coûteux. De plus, il ne permet pas de réaliser des pièces acoustiques, notamment des structures acoustiques, sans défaut d'accostage de ces derniers sur les peaux interne et externe. En effet, de par les jeux de fabrication de la peau interne, de la peau externe et de la structure acoustique, on assiste localement à des phénomènes de décollement.

En ce qui concerne le super alliage de type inconel®, ce dernier présente une forte densité ce qui pénalise la masse de la partie propulsive de l'aéronef.

Un but de la présente invention est donc de fournir un panneau acoustique pour une tuyère d'éjection présentant un gain de masse, facile à réaliser sans phénomène de décollement ou de désolidarisation locale.

A cet effet, la présente invention a pour objet un panneau acoustique pour une tuyère d'éjection comprenant les éléments principaux suivants:
- une peau externe présentant des trous acoustiques,
- une peau interne,
- une structure acoustique comprenant des cellules à âme alvéolaire et disposée entre la peau interne et la peau externe,
caractérisé en ce qu'au moins un élément principal choisi parmi la peau externe, la peau interne et la structure acoustique est formé par un matériau composite haute température et en ce que la structure acoustique est maintenue en contact sur au moins une des peaux interne et externe par compression à l'aide de moyens élastiques et/ou par fixation à l'aide de moyens mécaniques de fixation, notamment ponctuels.

La structure acoustique est en contact avec une des peaux soit par une liaison souple par compression ou par une liaison rigide. Les éléments principaux présentent l'avantage de s'ajuster entre eux de sorte à permettre une parfaite cohérence de liaison. De ce fait, lors de son utilisation, le panneau de l'invention ne présente pas de zone de décollement.

De manière avantageuse, le panneau acoustique de la présente invention permet de faciliter le montage de la structure acoustique entre les peaux interne et externe ce qui assure une bonne faisabilité industrielle.

Par ailleurs, le panneau acoustique de l'invention permet d'employer des matériaux différents, comme des métaux, des alliages et des composites, présentant des coefficients de dilatation spécifiques sans que la tenue structurale dudit panneau ne soit fragilisée.

Selon d'autres caractéristiques de l'invention, la structure de l'invention comporte l'une ou plusieurs des caractéristiques optionnelles suivantes considérées seules ou selon toutes les combinaisons possibles :
- au moins une partie des moyens élastiques comporte au moins un ensemble fibreux surmontant la structure acoustique et apte à se comprimer dans l'épaisseur ce qui permet d'éviter de boucher les trous acoustiques de la peau externe ;
- l'ensemble fibreux est formé par un matériau choisi parmi les feutres graphite et carbone haute température intégrant suivant le besoin de l'homme de métier au minimum : la porosité du feutre, la tortuosité des fibres, le rapport de forme, la taille moyenne des fibres, le taux d'enchevêtrement.... ce qui permet d'obtenir une bonne élasticité dans l'épaisseur de l'ensemble fibreux ;
- au moins une partie des moyens élastiques comporte des amortisseurs en prolongement de la paroi d'au moins une partie des cellules à âme alvéolaire de la structure acoustique ce qui permet de garantir le contact entre la structure acoustique et au moins une des peaux interne et externe ;
- les amortisseurs sont sous la forme de languettes courbes ;
- au moins un amortisseur est rapporté sur la paroi ce qui permet d'utiliser des matériaux de nature différente ;
- au moins un amortisseur et la paroi sont formés d'une seule pièce ce qui permet de fabriquer les moyens élastiques dès la fabrication du panneau acoustique de l'invention;
- les moyens élastiques comportent un ressort à spirale apte à exercer une pression contre la structure acoustique de sorte à mettre en contact ladite structure et la peau externe ;
- au moins une partie des moyens mécaniques est apte à fixer la structure acoustique sur au moins une des peaux interne et externe qui permet d'assurer une bonne fixation la structure acoustique sur au moins une des peaux interne et externe ;
- les moyens mécaniques de fixation comprennent des rivets fixant une pluralité de cellules à âme alvéolaire fermée à une extrémité et une des peaux interne et externe ;
- au moins une partie des moyens mécaniques de fixation relie l'entretoise des peaux interne et externe ;
- une partie des moyens mécaniques de fixation comprend des dépôts de colle ou de brasure appliqués entre la structure acoustique et au moins une des peaux interne et externe ;
- le panneau acoustique présente un jeu entre la structure acoustique et une des peaux interne et externe ce qui permet d'assurer le drainage du panneau acoustique de l'invention ;
- le matériau composite supporte une température au moins égale à environ 500°C ;
- le matériau composite est un matériau composite à matrice céramique.

Selon un deuxième aspect, la présente invention a pour objet une tuyère d'éjection pour une nacelle comportant un panneau acoustique selon l'invention.

Selon un deuxième aspect, la présente invention a pour objet une nacelle comportant une tuyère d'éjection selon l'invention.

L'invention sera davantage comprise à la lecture de la description non limitative qui va suivre, faite en référence aux figures ci-annexées.
- la figure 1 est une coupe transversale d'une nacelle de l'invention ;
- la figure 2 est une coupe transversale d'un mode de réalisation du panneau de l'invention,
- les figures 3 à 9 sont des variantes du mode de réalisation de la figure 2.

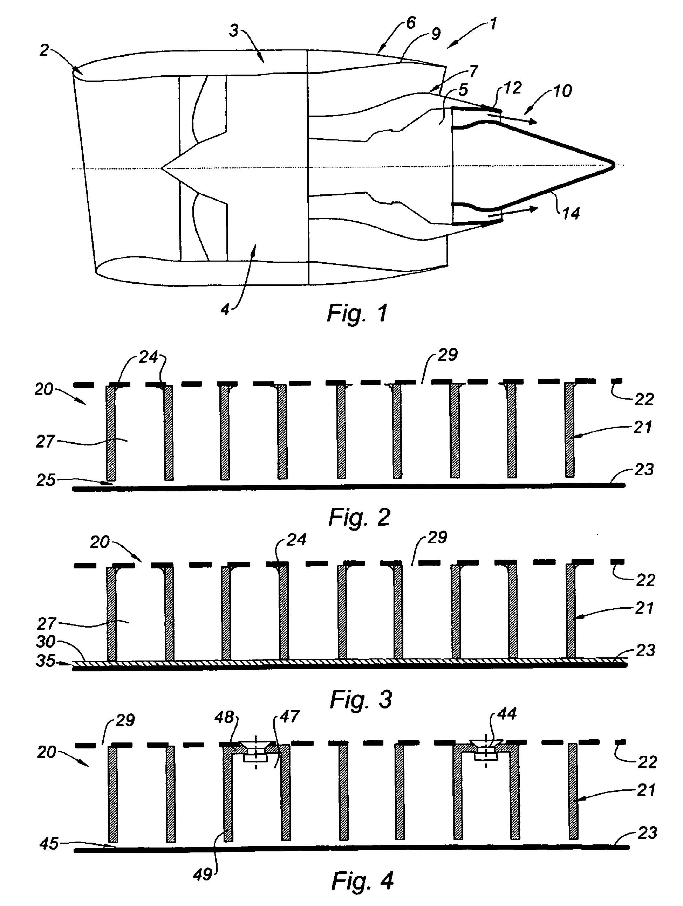

Comme représenté sur la figure 1, une nacelle 1 selon l'invention comprend une lèvre d'entrée d'air 2, une structure médiane 3 entourant une soufflante 4 d'un turboréacteur 5 et un ensemble aval 6. L'ensemble aval 6 est constitué d'une structure interne fixe 7 (IFS) entourant la partie amont du turboréacteur 5, d'une structure externe fixe (OFS) (non représenté) et d'un capot mobile9 comportant des moyens d'inversion de poussée. Un mât de suspension (non représenté) supporte le turboréacteur 5 et la nacelle 1 de l'invention.

La nacelle 1 de l'invention se termine par une tuyère d'éjection 10 comprenant un module externe 12 et un module interne 14. Les modules interne 14 et externe 12 définissent un canal d'écoulement de flux d'air primaire, dit chaud, sortant du turboréacteur 5.

Les modules interne 14 et externe 12 comporte un panneau acoustique comprenant les éléments principaux suivants :
- une peau externe présentant des trous acoustiques,
- une peau interne,
- une structure acoustique comprenant des cellules à âme alvéolaire et disposée entre la peau externe et la peau interne.

La peau interne est sensiblement pleine et non au contact du flux d'air chaud primaire.

La peau externe en contact avec le flux d'air chaud est perforée de multiples trous positionnés selon un agencement défini en fonction de l'atténuation acoustique recherchée. Sans y être limité, les trous posséderont typiquement un diamètre compris entre 0,2 et 3 mm, préférentiellement compris entre 0,8 et 1,6 mm.

Au moins un élément principal du panneau de l'invention est formé par un matériau composite. Plus spécifiquement, la peau interne, la peau externe et/ou la structure acoustique sont en matériaux composites.

Dans le cas où un élément principal n'est pas formé par un matériau composite, il peut être formé par un matériau métallique comme le titane ou l'inconel.

Selon un mode de réalisation préféré, le matériau composite supporte une température au moins égale à environ 500°C, voire plus. Le matériau composite est de manière avantageuse un matériau composite à matrice céramique.

La structure acoustique est maintenue en contact sur au moins une des peaux interne et externe par compression à l'aide de moyens élastiques et/ou par fixation à l'aide de moyens mécaniques de fixation, notamment ponctuels. Il est donc possible de combiner dans un même panneau de l'invention l'utilisation de moyens élastiques et de moyens mécaniques de fixation, notamment ponctuels, afin d'assurer une cohérence structurelle maximale.

Selon le mode de réalisation représenté à la figure 2, le panneau acoustique 20 présente une structure acoustique 21 en contact avec une des peaux acoustiques externe 22 et interne 23, notamment, par dépôt 24 de colle ou de brasure. La colle ou la brasure employée peut être tout type de colle ou de brasure connu par l'homme de métier pour ce genre de structure chaude.

De façon intéressante, la structure acoustique 21 est collée ou brasée sur la peau externe 22. Il est également possible de coller ou de braser la structure acoustique 21 sur la peau interne 23 afin d'éviter toute obstruction des trous acoustiques 29. De manière plus générale, le collage ou le brasage est effectuée de sorte à ne pas obstruer les trous acoustiques 29 afin d'éviter toute limitation de l'absorption acoustique.

Il est possible d'employer des éléments principaux (peau interne 23, peau externe 22 et structure acoustique 21) de nature différente. A titre d'exemple, la structure acoustique 21 peut être dans un matériau métallique de type titane ou inconel, et les peaux internes 23 et externe 22 en matériau composite, de type à matrice céramique.

Un espace ou jeu 25 peut être laissé entre une extrémité des cellules à âme alvéolaire 27 et la peau interne 23 ou la peau externe 22. L'une des peaux externe 22 et interne 23 non en contact avec la structure acoustique 21 est avantageusement autoraidie par tout moyen connu de l'homme du métier afin d'éviter le transit d'effort par déformation de la structure par ladite peau sur le reste du panneau de l'invention 20.

Le jeu 25 est défini de sorte à ne pas perturber la performance acoustique recherchée. Sans s'y limité, le jeu 25 pourra typiquement être compris entre 0 et 5mm, de préférence entre 0 et 1,5 mm.

Le jeu 25 permet également de manière avantageuse d'assurer le drainage du panneau acoustique 20 de l'invention. En effet, dans une structure conventionnelle de sandwich acoustique, la présence des trous sur la surface en contact aux éléments extérieurs permet à l'eau ou à d'autres liquides de pénétrer dans les alvéoles de la zone inférieure de la structure sandwich. Pour éviter toute accumulation des encoches sont réalisées dans la structure en nid d'abeille du côté peau pleine (opposées à la peau acoustique). Toutes les cellules étant perforées, le liquide serpente d'une cellule à l'autre par gravité jusqu'à un point le plus bas de la structure où un trou d'évacuation est réalisé. Dans le cas d'accumulation d'un liquide inflammable, il peut exister un fort risque d'incendie. Dans le cas d'accumulation d'eau, il existe un risque d'endommagement de la structure en cas de gel et de plus les cellules bouchées ne remplissent plus leur fonction acoustique).

Selon une variante représentée à la figure 3, le jeu 35 est rempli par un ensemble fibreux 30 comportant des fibres entremêlées, tel qu'un feutre. Ainsi, de manière avantageuse, les cellules à âme alévéolaire 27 sont mieux étanchées pour répondre aux performances acoustiques recherchées.

Selon un autre mode de réalisation préféré, au moins une partie des moyens mécaniques est apte à fixer la structure acoustique sur au moins une des peaux externe et interne ce qui permet d'assurer une bonne fixation de la structure acoustique et également une bonne cohérence du panneau acoustique de l'invention. De manière avantageuse, on obtient une très bonne qualité d'adhésion du panneau de l'invention sans avoir à réaliser des retouches ponctuelles pour éviter tout décollement. On réalise une économie sur les matériaux utilisés pour effectuer de telles retouches.

Selon un mode de réalisation représenté à la figure 4, les moyens mécaniques de fixation comprennent des rivets 44 fixant une des peaux, notamment la peau externe 22, et une pluralité de cellules à âme alvéolaire 47 qui sont fermés à une extrémité 48.

Lorsque la structure acoustique 21 est fixée sur la peau interne 23 on évite de manière avantageuse toute obstruction des trous acoustiques 29.

La densité des cellules alvéolaires 47 est choisie par l'homme du métier en fonction de la performance acoustique désirée.

Comme précédemment, un jeu 45 est laissé entre la structure acoustique 21 et la peau interne 23 sur laquelle il n'existe pas de contact.

Dans ce cas, il est avantageux d'introduire dans le jeu 45 un ensemble fibreux comportant des fibres entremêlées, tel qu'un feutre.

Le fond 48 des cellules à âme alvéolaire peut être intégré à la cellule 47, autrement dit fait de matière avec la paroi desdites cellules 47, ou provenir d'un élément rapporté sur la structure acoustique 21. A titre d'exemple, il est possible de rapporté des fonds collés, soudés ou crochetés. Dans ce dernier cas, l'extrémité des paroi 49 opposée au fond 48 de la structure acoustique peut être avantageusement surbaissée pour éviter toute surépaisseur due à la présence des crochets.

Il est également possible d'utiliser une structure acoustique comportant des cellules à âme alvéolaire fermées à leurs deux extrémités.

Selon la densité de rivets 44, les peaux externe 22 et interne 23 peuvent être assujetties l'une à l'autre par la structure acoustique 21 rivetée tantôt d'un coté tantôt de l'autre. Dans ce dernier cas, les peaux externe 22 et interne 23 peuvent avantageusement ne pas se rejoindre au-delà du panneau 20 de l'invention. En effet, la liaison entre les peaux externe 22 et interne 23 est assurée par la structure acoustique 21 sans risque de dilatation thermique différentielle.

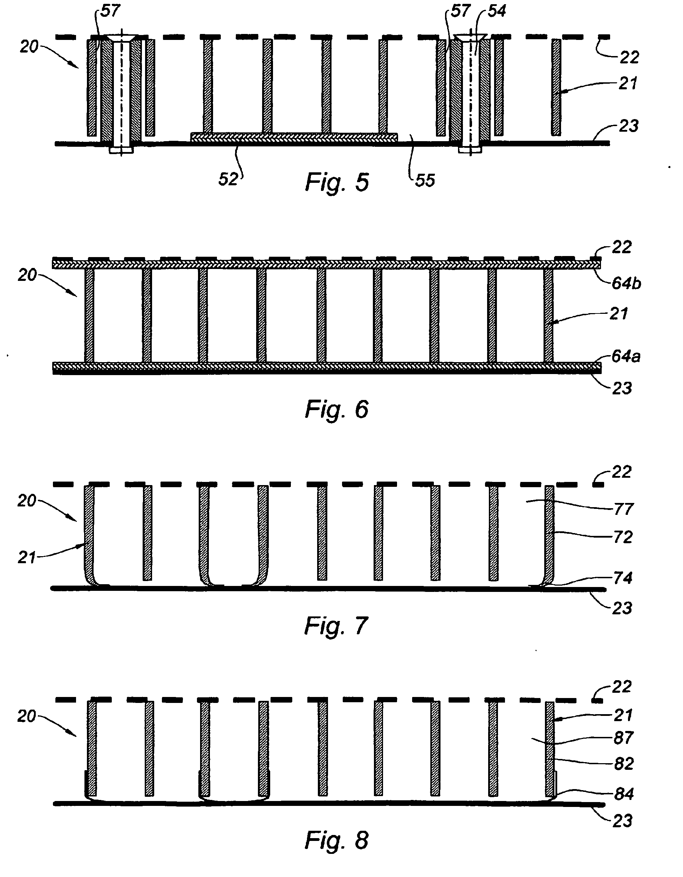

Selon le mode de réalisation représenté à la figure 5, au moins une partie des moyens mécaniques de fixation 54 relie l'entretoise des peaux externe 22 et interne 23. Les moyens mécaniques de fixation 54 peuvent ainsi relier les peaux externe 22 et interne 23 en traversant une pluralité de cellules à âme alvéolaire 57.

A titre d'exemple de moyens mécaniques de fixation 54, on peut citer des rivets ou boulons.

Un tel mode de réalisation permet de réaliser une fixation efficace sans impacter sur l'épaisseur de la structure acoustique 21.

La structure acoustique 21 peut en outre être collée ou en simple contact sur l'une ou l'autre peau externe 22.

Il est également possible que la structure acoustique 21 soit surmontée par un voire deux ensembles fibreux 52. En effet, il est possible de choisir les moyens mécaniques de fixation 54 de sorte à laisser d'un côté ou de chaque côté un jeu 55 entre la structure acoustique 21 et les peaux 22 et 23.

De manière préférée, les moyens mécaniques de fixation 52 sont réalisés dans le même matériau que la structure acoustique 21. De ce fait, il est assuré une continuité des dilatations thermiques dans le panneau acoustique 20 de l'invention.

Selon le mode de réalisation préféré, au moins une partie des moyens élastiques comportent au moins un ensemble fibreux surmontant la structure acoustique apte à se comprimer dans l'épaisseur. L'ensemble fibreux présente l'avantage de ne pas obstruer les trous acoustiques de la peaux externe.

Selon le mode de réalisation représenté à la figure 6, deux ensembles fibreux 64a et 64b entourent la structure acoustique 21.

La structure acoustique 21 est positionnée en simple contact contre les peaux 22 et 23 par pression de l'ensemble fibreux 64a et 64b qui comporte une bonne élasticité dans l'épaisseur. De ce fait, les trous acoustiques 29 ne sont pas totalement obstrués par de la matière.

L'ensemble fibreux 64a et 64b comporte notamment des fibres entremêlées. A titre d'exemple, on peut citer un feutre.

L'ensemble fibreux 64a et 64b est préférentiellement formé par un matériau choisi parmi les feutres graphite et carbone haute température intégrant suivant le besoin de l'homme de métier au minimum : la porosité du feutre, la tortuosité des fibres, le rapport de forme, la taille moyenne des fibres, le taux d'enchevêtrement, ce qui permet d'obtenir une bonne élasticité dans l'épaisseur dudit ensemble 64a et 64b.

Typiquement, l'épaisseur du feutre est compatible avec le jeu 25 et la valeur de compression recherchée.

Selon une variante non représentée, il est possible d'utiliser une structure acoustique 21 dans laquelle les parois des cellules à âme alvéolaire en regard d'au moins une peau externe 22 et interne 23 comporte des dentelures afin d'améliorer l'ancrage de la structure acoustique 21 sur l'ensemble fibreux 64a et 64b.

Selon un encore un autre mode de réalisation préféré, au moins une partie des moyens acoustiques comporte des amortisseurs en prolongement de la paroi d'au moins une partie des cellules à âme alvéolaire de la structure acoustique ce qui permet de garantir le contact entre la structure acoustique et au moins une des peaux interne et externe. Les amortisseurs présente une élasticité de faible amplitude qui assurent le contact de la structure acoustique sous une légère contrainte au niveau de l'interface des cellules à âme alvéolaire et des peaux interne et externe. Les amortisseurs sont de manière préférentielle sous la forme de languettes courbes.

Le nombre, la forme et la disposition desdits moyens élastiques sont adaptés par l'homme du métier.

Selon un premier mode de réalisation représenté à la figure 7, les amortisseurs 74 sont en prolongement de la paroi 72 d'au moins une partie des cellules à âme alvéolaire 77, a savoir la paroi 72 et les amortisseurs 74 sont formés d'une seule pièce ce qui permet de fabriquer les moyens élastiques dès la fabrication de la structure acoustique 21.

Selon une variante représentée à la figure 8, les amortisseurs 84 sont rapportés sur la paroi 82 d'une pluralité de cellules à âme alvéolaire 87 ce qui permet d'utiliser des matériaux de nature différente pour la réalisation de la structure acoustique 21 et des amortisseurs 84. Ainsi, il est envisageable d'employer une structure acoustique 21 métallique, et des peaux interne 23 et externe 22 en matériau céramique.

A titre d'exemple, les moyens élastiques 84 utilisés sont en inconel

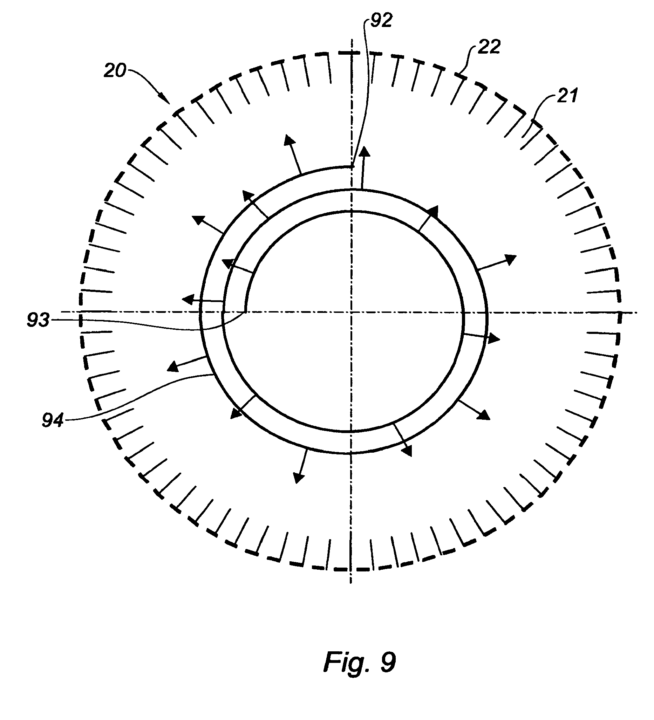

Selon un autre mode de réalisation préféré représenté à la figure 9, les moyens élastiques sont réalisés par la peau interne 23 ayant une fonction de ressort à spirale 94 apte à exercer une pression contre la structure acoustique 21 de sorte à mettre en contact ladite structure 21 et la peau externe 22. L'avantage d'une telle configuration est d'obtenir un effort de contact uniformément réparti sur toute la périphérie du panneau acoustique 20 de l'invention.

Le contact entre la structure acoustique 21 et le ressort à spiral 94 peut être réalisé par simple contact ou par collage ou par tout autre moyen connu de l'homme du métier permettant de fixer le ressort à spirale 94 sur la structure acoustique 21.

Le ressort à spirale 94 est réalisé dans un matériau approprié et connu de l'homme du métier. A titre d'exemple, on peut citer CMC, titane ou l'inconel.

De manière avantageuse, la circonférence de la peau interne en ressort à spirale 94, une fois dépliée, présente un rayon plus grand que celui de la circonférence de la structure acoustique 21 de sorte à obtenir une pression optimale sur ladite structure acoustique 21.

Le ressort à spirale 94 comprimé (voir figure 9) est positionné à l'intérieur de la virole externe formée par la peau externe 22 montée sur la structure acoustique 21. Le ressort à spirale 94 est ensuite libéré afin de venir se plaquer contre la face interne de la structure acoustique 21. Le ressort à spirale 94 remplit ainsi le rôle de la peau interne.

Une fois déplié, le ressort à spiral 94 peut comporter un jeu d'écartement entre ses deux extrémités 92 et 93 ou encore un chevauchement entre ses dernières. Les deux extrémités 92 et 93 peuvent également être éclissées.

Le ressort à spirale 94 peut être adapté en fonction des lignes sur laquelle ce dernier repose. Par exemple, le ressort à spirale 94 peut être réalisé de manière complète ou partielle selon une direction longitudinale du panneau 20 de l'invention.

Le panneau de l'invention peut comporter chacun des moyens élastiques et les moyens mécaniques de fixation, pris seuls ou en combinaison.

## Revendications

1. Panneau acoustique (20) pour une tuyère d'éjection (10) comprenant les éléments principaux suivants:
- une peau externe (22) présentant des trous acoustiques (29),
- une peau interne (23),
- une structure acoustique (21) comprenant des cellules à âme alvéolaire (27 ; 47 ; 77 ; 87) et disposée entre la peau interne (23) et la peau externe (22),
**caractérisé en ce qu'**au moins un élément principal choisi parmi la peau externe (22), la peau interne (23) et la structure acoustique (21) est formé par un matériau composite et **en ce que** la structure acoustique (21) est maintenue en contact sur au moins une des peaux interne (23) et externe (22) par compression à l'aide de moyens élastiques (64a, 64b ;74 ;84 ; 94) et/ou par fixation à l'aide de moyens mécaniques de fixation ponctuels (24 ; 44 ; 54).

2. Panneau (20) selon la revendication 1, **caractérisé en ce qu'**au moins une partie des moyens élastiques comporte au moins un ensemble fibreux (64a, 64b) surmontant la structure acoustique (21) et apte à se comprimer dans l'épaisseur.

3. Panneau (20) selon la revendication 2, **caractérisé en ce que** l'ensemble fibreux (64a, 64b) est formé par un matériau choisi parmi les feutres graphite et carbone haute température intégrant au minimum : la porosité du feutre, la tortuosité des fibres, le rapport de forme, la taille moyenne des fibres, le taux d'enchevêtrement.

4. Panneau (20) selon l'une quelconque des revendications 1 à 3, **caractérisé en ce qu'**au moins une partie des moyens élastiques comporte des amortisseurs (74 ; 84) en prolongement de la paroi (72 ; 82) d'au moins une partie des cellules à âme alvéolaire (77 ; 87) de la structure acoustique (21).

5. Panneau (20) selon la revendication 4, **caractérisé en ce que** les amortisseurs (74 ; 84) sont sous la forme de languettes courbes.

6. Panneau (20) selon la revendication 4 ou 5, **caractérisé en ce qu'**au moins un amortisseur (84) est rapporté sur la paroi (82).

7. Panneau (20) selon la revendication 4 ou 5, **caractérisé en ce qu'**au moins un amortisseur (74) et la paroi (72) sont formés d'une seule pièce.

8. Panneau (20) selon l'une quelconque des revendications 1 à 7, **caractérisé en ce que** les moyens élastiques comportent un ressort à spirale (94) apte à exercer une pression contre la structure acoustique (21) de sorte à mettre en contact ladite structure (21) et la peau externe (22).

9. Panneau (20) selon l'une quelconque des revendications 1 à 8, **caractérisé en ce qu'**au moins une partie des moyens mécaniques est apte à fixer la structure acoustique (21) sur au moins une des peaux interne (23) et externe(22).

10. Panneau (20) selon la revendication 9, **caractérisé en ce que** les moyens mécaniques de fixation comprennent des rivets (44) fixant une pluralité de cellules à âme alvéolaire (47) fermée à une extrémité (48) et une des peaux interne (23) et externe (22).

11. Panneau (20) selon l'une quelconque des revendications 1 à 10, **caractérisé en ce qu'**au moins une partie des moyens mécaniques de fixation (54) relie l'entretoise des peaux interne (23) et externe (22).

12. Panneau (20) selon l'une quelconque des revendications 1 à 11, **caractérisé en ce qu'**une partie des moyens mécaniques de fixation comprend des dépôts (24) de colle ou de brasure appliqués entre la structure acoustique (21) et au moins une des peaux interne (23) et externe (22).

13. Panneau (20) selon la revendication 12, **caractérisé en ce qu'**il présente un jeu (25) entre la structure acoustique (21) et une des peaux interne (23) et externe (22).

14. Tuyère d'éjection (10) pour une nacelle (1) comportant un panneau acoustique (20) selon l'une quelconque des revendications 1 à 13.

15. Nacelle (1) comportant une tuyère d'éjection (10) selon la revendication 14.

## Patentansprüche

1. Akustikplatte (20) für eine Schubdüse (10), die folgenden Hauptelemente umfassend:
- eine Außenhülle (22), die Akustikbohrungen (29) aufweist,
- eine Innenhülle (23),
- eine Akustikstruktur (21), die Zellen mit einem Wabenkern (27; 47; 77; 87) umfasst und zwischen der Innenhülle (23) und der Außenhülle (22) angeordnet ist,
**dadurch gekennzeichnet, dass** zumindest ein Hauptelement, das aus der Außenhülle (22), der Innenhülle (23) und der Akustikstruktur (21) ausgewählt wird, aus einem Verbundmaterial gebildet wird, und dadurch, dass die Akustikstruktur (21) durch Kompression mithilfe von elastischen Mitteln (64a, 64b; 74; 84; 94) und/ oder durch Befestigung mithilfe von punktuellen mechanischen Befestigungsmitteln (24; 44; 54) in Kontakt mit zumindest einem der Elemente Innenhülle (23) und Außenhülle (22) gehalten wird.

2. Platte (20) nach Anspruch 1, **dadurch gekennzeichnet, dass** zumindest ein Teil der elastischen Mittel zumindest eine faserige Einheit (64a, 64b) umfasst, die die Akustikstruktur (21) überragt und in der Lage ist, sich in der Dicke zu komprimieren.

3. Platte (20) nach Anspruch 2, **dadurch gekennzeichnet, dass** die faserige Einheit (64a, 64b) durch ein Material gebildet wird, das aus Hochtemperatur-Grafit- und Kohlenstoff-Filz ausgewählt wird, das zumindest folgendes aufweist: der Porosität des Filzes, die Gewundenheit der Fasern, das Formverhältnis, die durchschnittliche Größe der Fasern, der Verstrickungsanteil.

4. Platte (20) nach irgendeinem der Ansprüche 1 bis 3, **dadurch gekennzeichnet, dass** zumindest ein Teil der elastischen Mittel Dämpfer (74; 84) in der Verlängerung der Wand (72; 82) zumindest eines Teils der Zellen mit einem Wabenkern (77; 87) der Akustikstruktur (21) umfasst.

5. Platte (20) nach Anspruch 4, **dadurch gekennzeichnet, dass** die Dämpfer (74; 84) die Form von gekrümmten Federn aufweisen.

6. Platte (20) nach Anspruch 4 oder 5, **dadurch gekennzeichnet, dass** zumindest ein Dämpfer (84) an der Wand (82) angebracht wird.

7. Platte (20) nach Anspruch 4 oder 5, **dadurch gekennzeichnet, dass** zumindest ein Dämpfer (74) und die Wand (72) aus einem Teil gebildet werden.

8. Platte (20) nach irgendeinem der Ansprüche 1 bis 7, **dadurch gekennzeichnet, dass** die elastischen Mittel eine Spiralfeder (94) umfassen, die in der Lage ist, einen Druck auf die Akustikstruktur (21) auszuüben, um die besagte Struktur (21) mit der Außenhülle (22) in Kontakt zu bringen.

9. Platte (20) nach irgendeinem der Ansprüche 1 bis 8, **dadurch gekennzeichnet, dass** zumindest ein Teil der mechanischen Mittel in der Lage ist, die Akustikstruktur (21) auf zumindest einem der Elemente Innenhülle (23) und Außenhülle (22) zu befestigen.

10. Platte (20) nach Anspruch 9, **dadurch gekennzeichnet, dass** die mechanischen Befestigungsmittel Nieten (44) umfassen, die eine Vielzahl von Zellen mit geschlossenem Wabenkern (47) an einem Ende (48) und einem der Elemente Innenhülle (23) und Außenhülle (22) befestigen.

11. Platte (20) nach irgendeinem der Ansprüche 1 bis 10, **dadurch gekennzeichnet, dass** zumindest ein Teil der mechanischen Befestigungsmittel (54) den Abstandshalter der Innenhülle (23) und Außenhülle (22) verbindet.

12. Platte (20) nach irgendeinem der Ansprüche 1 bis 11, **dadurch gekennzeichnet, dass** ein Teil der mechanischen Befestigungsmittel Ablagerungen (24) eines Klebers oder einer Lötung umfasst, die zwischen der Akustikstruktur (21) und zumindest einem der Elemente Innenhülle (23) und Außenhülle (22) angebracht werden.

13. Platte (20) nach Anspruch 12, **dadurch gekennzeichnet, dass** sie ein Spiel (25) zwischen der Akustikstruktur (21) und einem der Elemente Innenhülle (23) und Außenhülle (22) aufweist.

14. Schubdüse (10) für eine Gondel (1), eine Akustikplatte (20) nach irgendeinem der Ansprüche 1 bis 13 umfassend.

15. Gondel (1), eine Schubdüse (10) nach Anspruch 14 umfassend.

## Claims

1. An acoustic panel (20) for an ejection nozzle (10) comprising the following main components:
- an external skin (22) having acoustic holes (29),
- an internal skin (23),
- an acoustic structure (21) comprising alveolar-core cells (27; 47; 77; 87) and disposed between the internal skin (23) and the external skin (22),
**characterized in that** at least one main component selected from the external skin (22), the internal skin (23) and the acoustic structure (21) is formed by a composite material and **in that** the acoustic structure (21) is held in contact on at least one of the internal (23) and external (22) skins by compression using elastic means (64a, 64b; 74; 84; 94) and/or by fastening using mechanical localized fastening means (24; 44; 54).

2. The panel (20) according to claim 1, **characterized in that** at least part of the elastic means includes at least one fibrous assembly (64a, 64b) surmounting the acoustic structure (21) and able to compress in thickness.

3. The panel (20) according to claim 2, **characterized in that** the fibrous assembly (64a, 64b) is formed by a material selected from high-temperature graphite and carbon felts integrating at least: the porosity of the felt, the tortuosity of the fibers, the aspect ratio, the average size of the fibers, the entanglement rate.

4. The panel (20) according to any one of claims 1 to 3, **characterized in that** at least part of the elastic means includes dampers (74; 84) extending from the wall (72; 82) of at least part of the alveolar-core cells (77; 87) of the acoustic structure (21).

5. The panel (20) according to claim 4, **characterized in that** the dampers (74; 84) are in the form of curved tongues.

6. The panel (20) according to claim 4 or 5, **characterized in that** at least one damper (84) is attached on the wall (82).

7. The panel (20) according to claim 4 or 5, **characterized in that** at least one damper (74) and the wall (72) are formed in a single piece.

8. The panel (20) according to any one of claims 1 to 7, **characterized in that** the elastic means include a spiral spring (94) able to exert a pressure against the acoustic structure (21) so as to put said structure (21) and the external skin (22) in contact.

9. The panel (20) according to any one of claims 1 to 8, **characterized in that** at least part of the mechanical means is able to fasten the acoustic structure (21) on at least one of the internal (23) and external (22) skins.

10. The panel (20) according to claim 9, **characterized in that** the mechanical fastening means comprise rivets (44) fastening a plurality of closed alveolar-core cells (47) to one end (48) and one of the internal (23) and external (22) skins.

11. The panel (20) according to any one of claims 1 to 10, **characterized in that** at least part of the mechanical fastening means (54) connects the spacer of the internal (23) and external (22) skins.

12. The panel (20) according to any one of claims 1 to 11, **characterized in that** part of the mechanical fastening means comprises glue or solder deposits (24) applied between the acoustic structure (21) and at least one of the internal (23) and external (22) skins.

13. The panel (20) according to claim 12, **characterized in that** it has a play (25) between the acoustic structure (21) and one of the internal (23) and external (22) skins.

14. An ejection nozzle (10) for a nacelle (1) including an acoustic panel (20) according to any one of claims 1 to 13.

15. A nacelle (1) including an ejection nozzle (10) according to claim 14.
